# EUROPEAN PATENT APPLICATION

(11) **EP 4 147 831 A1**
(43) Date of publication of application: **15.03.2023**
(21) Application number: 22195282.3
(22) Date of filing: 13.09.2022
(51) Int. Cl.: B25J 15/00, B25J 15/06, B65G 59/04

(54) **A VACUUM-OPERATED END-OF-ARM TOOL**

(30) Priority: 13.09.2021 DE 102021123573
(71) Applicant: Norgren GmbH, 46519 Alpen (DE)
(72) Inventor: Abraham, Matthias, 46519 Alpen (DE); Riedel, Ralph, 46519 Alpen (DE); Scholz, Axel, 46519 Alpen (DE)
(74) Representative: Whitfield, Jack Stephen

(57) **Abstract**

A mechanical arm apparatus for transporting an object using a vacuum-operated end-of-arm tool, the mechanical arm apparatus comprising a mechanical arm; and a vacuum-operated end-of-arm tool connected to the arm. The end-of-arm tool comprises at least one gripper assembly comprising a vacuum cup for attachment to a surface of an object to be transported. The gripper assembly further comprises an actuator configured to move the vacuum cup with respect to the arm between a first position where the vacuum cup is in a first, extended position with respect to the arm, and a second position where the vacuum cup is in a second, retracted position with respect to the arm.

## Description

### FIELD

The present teachings relate to a mechanical arm apparatus for transporting an object using a vacuum-operated end-of-arm tool, and to a method of lifting an object using a vacuum-operated end-of-arm tool.

### BACKGROUND

It is known to use a mechanical arm to handle objects to be transported. For example, a mechanical arm can be used in moving products at the end of a manufacturing line, e.g. to load the products on a pallet, or to sort parcels to be delivered. Such a mechanical arm will commonly have an end-of-arm tool for gripping the object to be transported.

It is well known to use a vacuum-operated end-of-arm tool with a vacuum-operated gripper or grippers by which the object is secured to the end-of-arm tool. Such grippers often include a vacuum cup for securing the object to the end-of-arm tool. Once secured, the mechanical arm is used to transport the object. When the object has been transported, the gripper or grippers are released, e.g. by de-activating the vacuum source or opening a valve.

In some applications, the size, shape, and, in particular, weight of an object to be transported are known in advance. In such applications an appropriate end-of-arm tool can be selected accordingly, or the known parameters can be used to configure a flexible end-of-arm tool appropriately.

For applications such as handling of parcels to be delivered, the size, shape and weight of each object or parcel is likely to be unknown. In such applications, it is known to use a vacuum-operated end-of-arm tool that can be adapted for use with different types of object. The size and shape of an object can be assessed either in person by an operator or remotely by an operator using a video camera, and the end-of-arm tool can be arranged accordingly. However, visual inspection does not provide an indication of the weight of an object. The vacuum-operated end-of-arm tool must be attached to the object via grippers and the mechanical arm used to lift or attempt to lift the object before any idea of weight is given. It may also be unclear whether or not an object is free to be lifted, or whether it is blocked from being lifted by e.g. further objects, for example in a crate of multiple objects, until the mechanical arm initiates a lifting operation.

Where the end-of-arm tool is vacuum-operated, and so has a series or an array of vacuum cups securing the object to be transported to the end-of-arm tool, the vacuum cups can be damaged if the object is too heavy to be lifted by the end-of-arm tool. As the vacuum cups are secured to the object, when the mechanical arm initiates the lifting operation, the vacuum cups remain secured to the object. If the object is of a weight that can be lifted by the mechanical arm and the end-of-arm tool, the object will be lifted and the vacuum cups remain secured to the object. If the object is over a maximum weight that can be lifted by the mechanical arm and the end-of-arm tool, the vacuum cups can be torn from the object. Damage can be caused to the vacuum cups so that a vacuum can no longer be formed to secure the vacuum cups to the object. Such damaged vacuum cups must be replaced.

The present teachings seek to overcome or at least mitigate the problems of the prior art.

### SUMMARY

According to a first aspect of the present teachings there is provided a mechanical arm apparatus for transporting an object using a vacuum-operated end-of-arm tool, the mechanical arm apparatus comprising a mechanical arm; and a vacuum-operated end-of-arm tool connected to the arm. The end-of-arm tool comprises at least one gripper assembly comprising a vacuum cup for attachment to a surface of an object to be transported. The gripper assembly further comprises an actuator configured to move the vacuum cup with respect to the arm between a first position where the vacuum cup is in a first, extended position with respect to the arm, and a second position where the vacuum cup is in a second, retracted position with respect to the arm.

The vacuum cup being movable with respect to the arm upon actuation of a piston allows the weight of an object to which the vacuum cup is attached to be gauged against a known weight limit of the gripper assembly. Damage to the gripper assembly can be avoided, as the opportunity to avoid lifting an object that is over the weight limit is provided.

In exemplary embodiments, the actuator is a piston connected to the vacuum cup and configured to move the vacuum cup with respect to the arm upon actuation of the piston, wherein the piston is movable between a first position where the vacuum cup is in a first, extended position with respect to the arm, and a second position where the vacuum cup is in a second, retracted position with respect to the arm.

The actuator being a piston allows retraction and extension of the vacuum cup with respect to the arm to be simply and effectively controlled.

In exemplary embodiments, the vacuum cup is configured for attachment to a surface of an object by a holding force, and the piston is configured for actuation by an actuating force. The actuating force is substantially equal to the holding force.

In exemplary embodiments, the actuating force is less than the holding force.

Providing an actuating force substantially equal to or less than the force by which the vacuum cup is secured to the surface of an object prevents damage to the vacuum cup.

When the actuating force is applied, the object will not be lifted if the object weight is higher than the actuating force - that is, if the object weight is higher than the holding force. The vacuum cup is thus protected. If the object weight is less than the actuating force, the object will be lifted by the gripper assembly - as the actuating force is equal to or less than the holding force, it is known that the holding force is sufficient to carry the object, so that the object will not fall, and the vacuum cup will not be damaged.

In exemplary embodiments, the gripper assembly comprises a first pressure chamber at a first side of the piston, and a second pressure chamber at a second side of the piston. For actuation of the piston to the second position, the first pressure chamber is configured to be at a first pressure, and the second pressure chamber is configured to be at a second pressure, higher than the first pressure, for generation of the actuating force.

The pressure difference between the first and second pressure chambers causes movement of the piston to the second position, in a simple and effective arrangement.

In exemplary embodiments, the first pressure is a negative pressure.

As the end-of-arm tool is vacuum-operated, an existing vacuum source can be used to conveniently create negative pressure.

In exemplary embodiments, the second pressure is substantially atmospheric pressure.

In exemplary embodiments, the gripper assembly comprises a third chamber defined by the vacuum cup, and the third chamber is configured to be at a pressure substantially equal to or greater than that of the first pressure chamber, for generation of the holding force.

The first and third chambers being at the same pressure, or the third chamber being at a pressure higher than that of the first pressure chamber, allows the holding force to be the same as or greater than the actuating force, so that damage to the vacuum cup is avoided.

In exemplary embodiments, the third chamber is connected to the first pressure chamber.

Connecting the first and third chambers provides a simple means of equalising pressure between the chambers.

In exemplary embodiments, the piston defines a conduit connecting the first pressure chamber and the third chamber.

Connecting the first and third chambers via the piston allows equalisation of pressure between the chambers in a simple manner, without the need for additional components.

In exemplary embodiments, the first pressure is substantially atmospheric pressure.

In exemplary embodiments, the gripper assembly comprises a third chamber defined by the vacuum cup, and the third chamber is configured to be at a third, negative, pressure, for generation of the holding force.

As the end-of-arm tool is vacuum-operated, an existing vacuum source can be used to conveniently create negative pressure and easily control the holding force.

In exemplary embodiments, the gripper assembly further comprises a sensor for detecting the third pressure, and wherein the second pressure is adjusted depending on the third pressure.

The actuating force can thus be adjusted depending on the holding force of the vacuum cup.

In exemplary embodiments, the gripper assembly further comprises a proportional valve between a pressure source and the second pressure chamber, for adjustment of the second pressure depending on the third pressure.

The proportional valve is an effective arrangement for adjusting the actuating force depending on the holding force.

In exemplary embodiments, the gripper assembly further comprises a sensor configured to detect movement of the piston to the second position.

Indication from the sensor of whether the piston has moved to the second position can be used to determine whether the object has been lifted - if the piston is in the second position, the object has been lifted. If the piston is not in the second position, the object has not been lifted. Whether or not the object is of a mass that can be lifted by the arm assembly without causing damage to the vacuum cup can thus be determined, and a decision on whether to proceed with an arm lifting operation can be made. If the object is of too great a mass to be safely lifted, factors can be changed in response to this, such as rearranging the end-of-arm tool or removing any other objects blocking the object to be lifted.

In exemplary embodiments, the mechanical arm apparatus further comprises a control system for controlling operation of the mechanical arm apparatus.

There is further provided a method of lifting an object using a vacuum-operated end-of-arm tool, the method comprising the steps of:
a) providing a mechanical arm apparatus as described above;
b) positioning at least one of said vacuum cups on a surface of an object to be transported, the or each vacuum cup being arranged in a first configuration;
c) applying a holding force to secure the or each vacuum cup to the surface; and
d) applying an actuating force to move the vacuum cup to the second position.

Retracting the vacuum cup or cups to the second position allows the weight of an object to which the vacuum cup or cups is attached to be gauged against a known weight limit of the gripper assembly. Damage to the gripper assembly can be avoided, as the opportunity to avoid lifting an object that is over the weight limit is provided.

In exemplary embodiments, the actuating force is substantially equal to the holding force. In exemplary embodiments, the actuating force is less than the holding force.

Providing an actuating force substantially equal to the force by which the vacuum cup is secured to the surface of an object prevents damage to the vacuum cup. When the actuating force is applied, the object will not be lifted if the object weight is higher than the actuating force - that is, if the object weight is higher than the holding force. The vacuum cup is thus protected. If the object weight is less than the actuating force, the object will be lifted by the gripper assembly - as the actuating force is equal to or less than the holding force, it is known that the holding force is sufficient to carry the object, so that the object will not fall, and the vacuum cup will not be damaged.

In exemplary embodiments, the gripper assembly comprises a sensor configured to detect movement of the vacuum cup to the second position, further comprising the steps of:
e) detecting movement of the vacuum cup to the second position; and
f) upon movement of the vacuum cup to the second position, initiating movement of the arm to lift the object.

Indication from the sensor of whether the vacuum cup has moved to the second position can be used to determine whether the object has been lifted - if the vacuum cup is in the second position, the object has been lifted. If the vacuum cup is not in the second position, the object has not been lifted. Whether or not the object is of a mass that can be lifted by the arm assembly without causing damage to the vacuum cup can thus be determined, and a decision on whether to proceed with an arm lifting operation can be made.

In exemplary embodiments, the gripper assembly comprises a sensor configured to detect movement of the vacuum cup to the second position, further comprising the steps of:
g) detecting the absence of movement of the vacuum cup to the second position;
h) re-positioning the at least one of said vacuum cups on a surface of an object to be transported in a second configuration, different to the first configuration; and
repeating steps c) and d).

Adjustment of the vacuum cup configuration can lead to lifting of an object previously found to be too heavy, e.g. by altering the configuration to secure a greater number of vacuum cups to the surface of the object.

### BRIEF DESCRIPTION OF THE DRAWINGS

Figure 1 is a perspective view of a mechanical arm apparatus with a vacuum-operated end-of-arm tool according to an embodiment in a first configuration;
Figure 2 is a perspective view of the mechanical arm apparatus and vacuum-operated end-of-arm tool of the embodiment of Figure 1 in a second configuration;
Figure 3 is a perspective view of the vacuum-operated end-of-arm tool of the embodiment of Figure 1 in a third configuration;
Figure 4 is a perspective view of the vacuum-operated end-of-arm tool of the embodiment of Figure 1 in a fourth configuration;
Figure 5 is a perspective view of the vacuum-operated end-of-arm tool of the embodiment of Figure 1 in a fifth configuration;
Figure 6 is a perspective view of the vacuum-operated end-of-arm tool of the embodiment of Figure 1 in a sixth configuration;
Figure 7 is a perspective view of the vacuum-operated end-of-arm tool of the embodiment of Figure 1 in a seventh configuration;
Figure 8 is a perspective view of the vacuum-operated end-of-arm tool of the embodiment of Figure 1 in an eighth configuration;
Figure 9 is a schematic view of a first gripper assembly for the end-of-arm tool of the embodiment of Figures 1-8;
Figure 10 is a cross-sectional view through the gripper assembly of Figure 9;
Figure 11 is a schematic view of a second gripper assembly for the end-of-arm tool of the embodiment of Figures 1-8; and
Figure 12 is a cross-sectional view through the gripper assembly of Figure 11.

### DETAILED DESCRIPTION

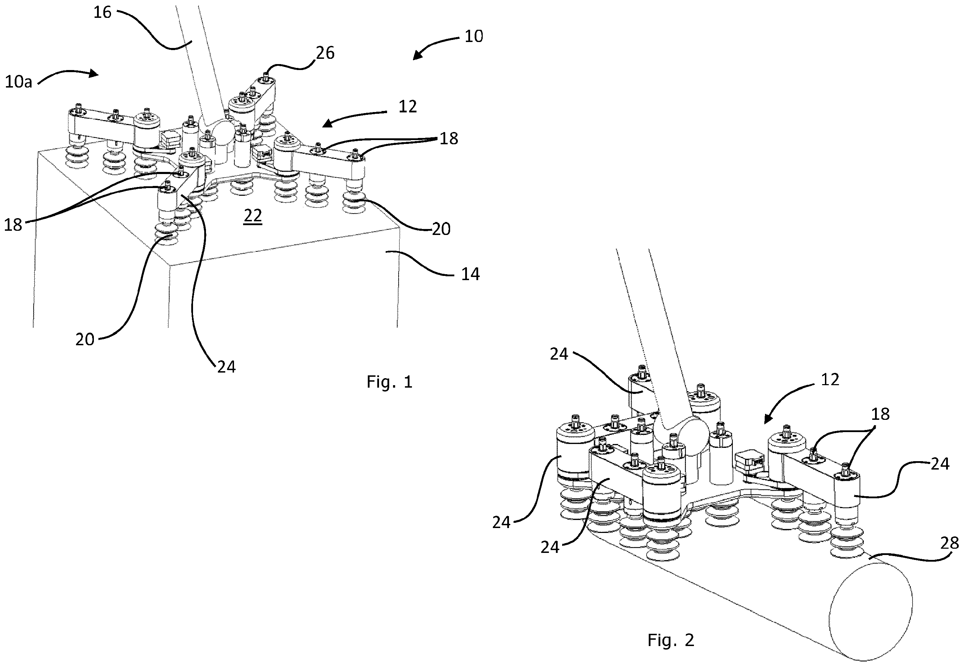

With reference to Figure 1, a mechanical arm apparatus is indicated generally at 10. Figure 1 shows a first end 10a of the mechanical arm apparatus 10. The mechanical arm apparatus 10 has a mechanical arm 16. The mechanical arm apparatus 10 has a first, gripping end 10a, and a second end (not shown) by which the mechanical arm 16 is controlled.

The first end 10a has a vacuum-operated end-of-arm tool 12 secured to the mechanical arm 16 for handling an object 14. The end-of-arm tool 12 is pivotably secured to the mechanical arm 16 for manoeuvrability. The second end of the mechanical arm apparatus 10 is connected to a vacuum source for the end-of-arm tool 12, as discussed in further detail below. The mechanical arm 16 of this embodiment is a robotic arm. The mechanical arm 16 is robotically operated in order to transport the object 14, as is well known from the prior art.

The end-of-arm tool 12 has at least one gripper assembly 18. Each gripper assembly 18 has a vacuum component 20 for attachment to a surface 22 of the object 14. In this embodiment, the vacuum component is a vacuum cup 20. In this embodiment, the vacuum cup is of the 'accordion type', with concertina folds. In alternative embodiments, the vacuum cup 20 is of some other suitable type. In use, the object 14 is secured to the mechanical arm 16 by the application of a vacuum source to the vacuum cups 20.

In this embodiment, the end-of-arm tool 12 has a series of gripper assemblies 18 supported on arms 24. The arms 24 are pivotably secured to a body 26 of the end-of-arm tool 12, such that the arms 24 are movable in relation to the body 26. In this embodiment, the end-of-arm tool 12 has twelve gripper assemblies 18, with three gripper assemblies 18 supported by each of four arms 24. In alternative embodiments, the end-of-arm tool has some other number of gripper assemblies, arranged in some other formation. For example, in alternative embodiments, the end-of-arm tool has fewer gripper assemblies, or more gripper assemblies, arranged on more arms, or on fewer arms. In alternative embodiments, the gripper assembly or assemblies are fixed in relation to the body of the end-of-arm tool.

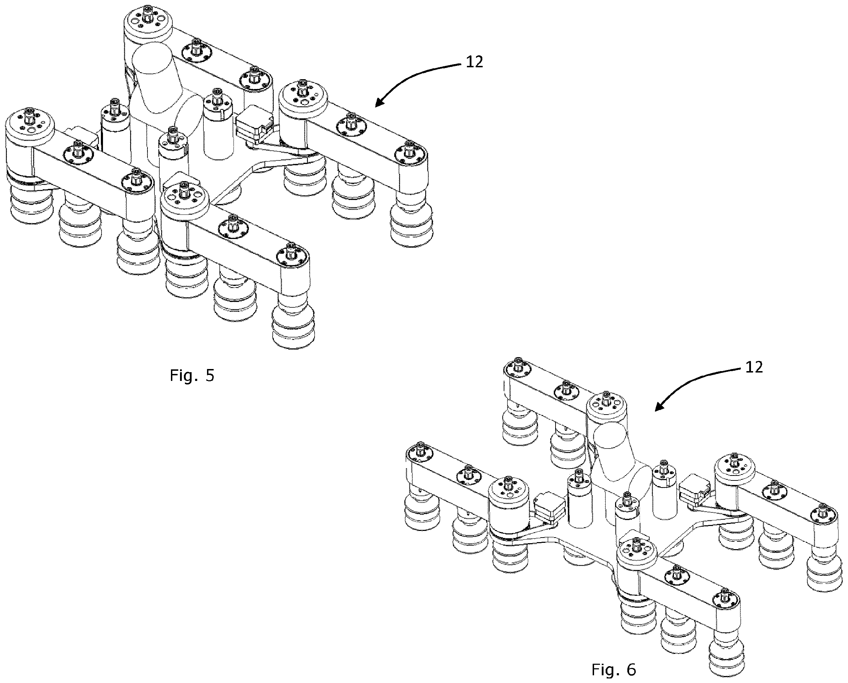

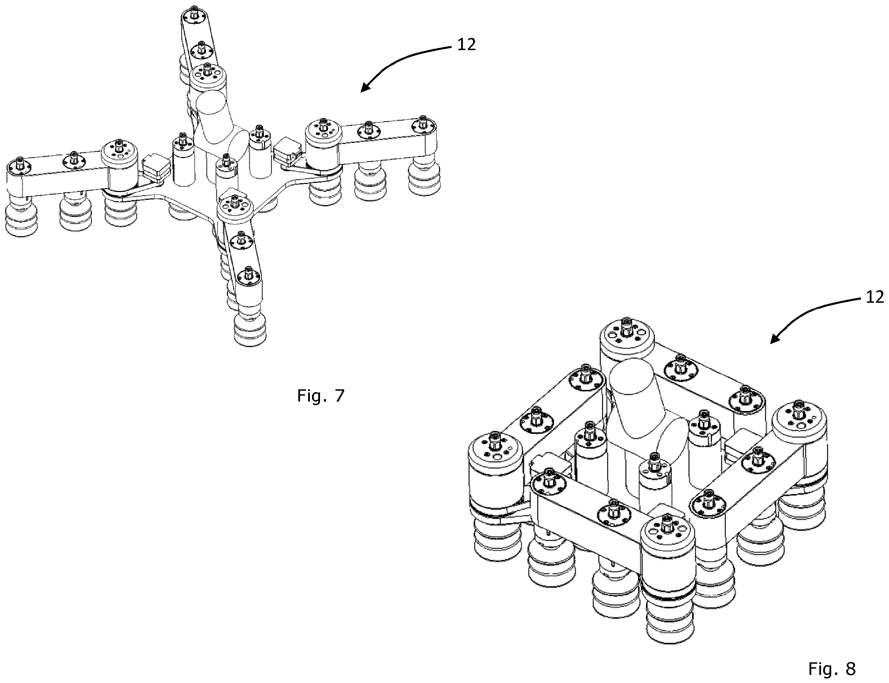

As shown in Figures 1 to 8, the arms 24 can be positioned according to the requirements of the object 14. In Figure 1, the arms 24 are deployed in a substantially X formation, so that the gripper assemblies 18 are extended over the square surface 22 of the object 14. As shown in Figure 2, a further configuration of the end-of-arm tool 12 is used for securing the gripper assemblies 18 to a cylindrical object 28. In this instance, two of the four arms 24 are deployed in a linear arrangement in respect to one another, whilst the remaining two of the arms 24 are folded towards the body 26 and are not secured to a surface of the object 28.

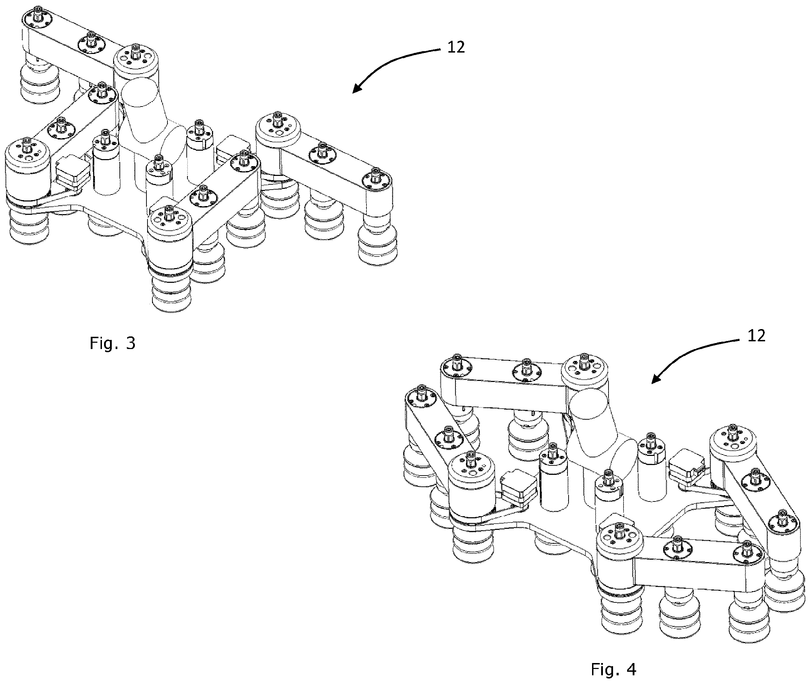

Further potential configurations of the arms 24 are shown in Figures 3 to 8.

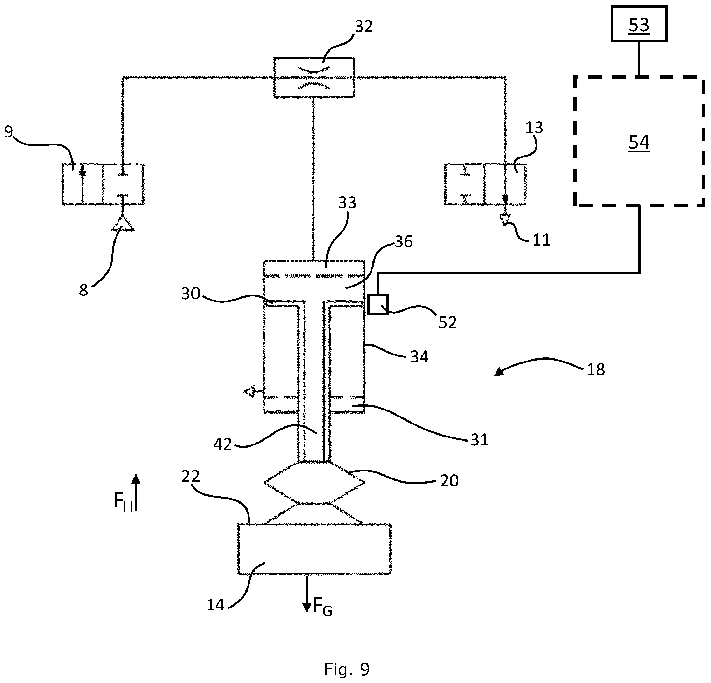

Each gripper assembly 18 is supplied with fluid from a pressure fluid source 8 (see Figure 9). An inlet valve 9 controls the flow of fluid into the gripper assembly 18. Fluid leaves the gripper assembly 18 at an outlet 11 controlled by an outlet valve 13.

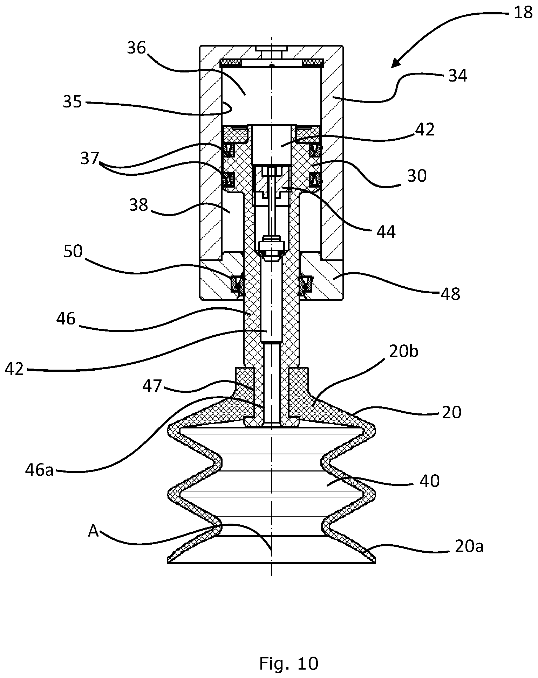

With reference to Figures 9 and 10, each gripper assembly 18 has an actuator 30 for moving the vacuum cup 20 with respect to the arm 16. That is, the actuator 30 is for moving the vacuum cup 20 with respect to the body 26 of the end-of-arm tool 12. The actuator 30 is configured to move the vacuum cup 20 between a first position, where the vacuum cup 20 is extended with respect to the arm 16, and a second position, wherein the vacuum cup 20 is retracted with respect to the arm 16.

Control of the vacuum cup 20 between extended and retracted positions allows the lifting ability of the gripper assembly 18 to be tested against the weight of the object 14 before mechanical arm 16 is used to lift the object 14. In use, the gripper assembly 18 is secured to the surface 22 by positioning of the vacuum cup 20 on the surface 22 with the vacuum cup 20 in the first, extended, position. Activation of a vacuum source 32 secures the vacuum cup 20 to the surface 22. The actuator 30 is operated to move the vacuum cup 20 to the second, retracted, position. If the object 14 is above a certain weight, the actuator 30 will be unable to move the vacuum cup 20 to the second, retracted, position. Damage to the gripper assembly 18, and in particular to the vacuum cup 20, due to overloading, is prevented. This is in contrast to the prior art where lifting by the mechanical arm 16 takes place without any pre-lifting by the end-of-arm tool 12.

In this embodiment, the actuator is a piston 30 supported within a body 34 of the gripper assembly 18. The body 34 defines a longitudinal axis A along which the piston 30 reciprocates. The piston 30 is secured to the vacuum cup 20, such that movement of the piston 30 results in corresponding movement of the vacuum cup 20.

In this embodiment, the vacuum cup 20 has a first end 20a by which the vacuum cup 20 is secured to the surface 22 of the object 14. The vacuum cup 20 has a second end 20b opposing the first end 20a along the longitudinal axis A. In this embodiment, the piston 30 is secured to the second end 20b of the vacuum cup 20. Actuation of the piston 30 along the longitudinal axis A thus causes movement of the vacuum cup 20 along the longitudinal axis A.

The piston 30 is movable between a first position 31, as shown in Figure 9, distal the arm 16, and a second position 33, proximal the arm 16. When the piston 30 is in the first position 31, the vacuum cup 20 is in a corresponding first, extended position with respect to the arm 16. When the piston 30 is in the second position 33, the vacuum cup 20 is in a corresponding second, retracted position with respect to the arm 16.

In use, the vacuum cup 20 is secured to the surface 22 by a holding force F_{H} (see Figure 9). The piston 30 is movable from the first position 31 to the second position 33 by an actuating force F_{A} substantially along the longitudinal axis A in a direction towards the arm 16.

The actuating force F_{A} applied is equal to the holding force F_{H}. As the actuating force F_{A} is equal to the holding force F_{H}, if the weight of the object 14 is higher than the holding force F_{H} - i.e. the force at which the vacuum cup 20 will remain secured to the surface 22 - no lifting of the object 14 will take place. No damage to the vacuum cup 20 can thus occur.

When the actuating force F_{A} is applied, the object 14 will not be lifted if an object weight F_{G} is higher than the actuating force F_{A}. As the actuating force F_{A} is equal to the holding force F_{H}, the object 14 cannot be lifted if the object weight F_{G} is more than the holding force F_{H}.

If the object weight F_{G} is less than the actuating force F_{A}, the object 14 will be lifted by the gripper assembly 18. In such case, it is known that the holding force F_{H} is sufficient to carry the object 14, or the object would not have been lifted by the gripper assembly 18 upon actuation of the piston 30.

In an alternative embodiment, the pressure of the second pressure chamber is controlled to be some pressure other than atmospheric pressure. In an alternative embodiment, the actuating force F_{A} applied is less than the holding force F_{H}. As the actuating force F_{A} is less than the holding force F_{H}, if the weight of the object 14 is higher than the holding force F_{H} - i.e. the force at which the vacuum cup 20 will remain secured to the surface 22 - no lifting of the object 14 will take place. No damage to the vacuum cup 20 can thus occur.

When the actuating force F_{A} is applied, the object 14 will not be lifted if an object weight F_{G} is higher than the actuating force F_{A}. As the actuating force F_{A} is less than the holding force F_{H}, the object 14 cannot be lifted if the object weight F_{G} is more than the holding force F_{H}.

In an alternative embodiment, the actuating force F_{A} is greater than the holding force F_{H}, and some alternative suitable safety factor is provided to prevent damage to the vacuum cup.

The body 34 of the gripper assembly 18 is in this embodiment substantially cylindrical. The body 34 defines first 36 and second 38 pressure chambers divided by the piston 30. The first pressure chamber 36 is proximal the arm 16 along the longitudinal axis A. The second pressure chamber 38 is distal the arm 16 along the longitudinal axis A. The shape of the piston 30 is dictated by the shape of the body 34 and the pressure chambers 36, 38, such that, in this embodiment, the piston 30 is substantially circular in cross section.

For actuation of the piston 30 from the first position 31 to the second position 33, the second pressure chamber pressure is higher than the first pressure chamber pressure. A higher pressure in the second pressure chamber 38 than in the first pressure chamber 36 causes the piston 30 to be moved towards the mechanical arm 16, i.e. such that the vacuum cup 20 is moved to the second, retracted position.

In the embodiment shown in Figures 9 and 10, the first pressure chamber 36 pressure is a negative pressure. That is, a vacuum is created in the first pressure chamber 36. As in this embodiment the end-of-arm tool 12 is vacuum-operated, a vacuum source 32 is already provided. Using the vacuum source 32 to create a lower pressure in the first pressure chamber 36 than in the second pressure chamber 38 makes good use of the existing vacuum source 32.

In this embodiment, the second pressure chamber 38 is at atmospheric pressure, or is at substantially atmospheric pressure. Atmospheric pressure within the second pressure chamber 38 is easily produced.

The gripper assembly 18 has a third pressure chamber 40 defined by the vacuum cup 20. In this embodiment, the third pressure chamber 40 is connected to the first pressure chamber 36. In this embodiment, a conduit 42 through the piston 30 links the first and third chambers 36, 40 in fluid communication. In this embodiment, the first pressure chamber 36 and the third chamber 40 are at a same pressure due to this connection. As shown in Figure 10, the gripper assembly 18 includes a non-return valve 44 within the conduit 42. The non-return valve 44 is shown in Figure 10 in a closed position, such that fluid flow between the first and third pressure chambers 36, 40 is prevented. When the vacuum source is active, the non-return valve 44 is moved to an open position, such that fluid flow between the first and third pressure chambers 36, 44 is enabled, and the pressure of the first pressure chamber 36 and the third pressure chamber 40 is equalised.

The piston 30 is sealed against an interior wall 35 of the body 34. In this embodiment, the gripper assembly 18 has two circumferential seals 37, for example, an O ring, supported in the piston 30 and located between the piston 30 and the wall 35.

In this embodiment, the gripper assembly 18 has a connecting portion 46 connecting the vacuum cup 20 to the piston 30. In this embodiment, the connecting portion 46 is integral to the piston 30. The connecting portion 46 extends from the piston 30 through a first end wall 48 of the body 34 to the vacuum cup 20. A seal 50 is provided in the end wall 48 between the end wall 48 and the connecting portion 46. The connecting portion 46 defines the conduit 42 that connects the first and third pressure chambers 36, 40.

The connecting portion 46 has a first end 46a, distal the piston 30, to which the vacuum cup 20 is attached. In this embodiment the first end 46a extends through the second end 20b of the vacuum cup 20 and defines a notch 47 with which the second end 20b of the vacuum cup 20 is engaged. The engagement of the second end 20b with the notch 47 forms a seal between the vacuum cup 20 and the connecting portion 46 to seal the chamber 40.

In use, when the vacuum cup 20 is secured to the surface 22, and the vacuum source 32 is activated, the holding force F_{H} is the pressure of the third pressure chamber 40. The actuating force F_{A}, is the pressure of the first pressure chamber 36. Due to the pressure equalisation between the first and third pressure chamber 36, 40 described above, the holding force F_{H} is equal to the actuating force F_{A}. This ensures that the holding force F_{H} cannot be greater than the actuating force F_{A}, so that damage to the vacuum cup 20 is avoided.

The gripper assembly 18 has a sensor 52 for detecting movement of the piston 30 to the second position 33, and so detecting movement of the vacuum cup 20 to the retracted position. As the sensor 52 detects movement of the piston 30 to the second position 33, the sensor 52 is able to provide an indication of whether the object 14 has been lifted by the gripper assembly 18. For example, a visual indicator 53 can provide a visual indication, or an oral indication can be given to an operator of whether or not the arm 16 should be used to transport the object 14, or whether intervention by an operator is required. That is, if the object 14 has not been lifted, an operator can, for example, clear any kind of blockage or reconfigure the end-of-arm tool 12 such that more of the gripper assemblies 18 are secured to the surface 22, to increase the overall holding force F_{H}. Where multiple gripper assemblies 18 are secured to the surface 22 the cumulative holding force and actuating force are taken into consideration against the weight force F_{G} of the object 14.

The end-of-arm tool 12 has a control system 54 for receiving a signal from the sensor 52 and providing an indication at the indicator 53 of whether or not the object 14 has been lifted or, indeed, is suitable for lifting, by the arm 16.

Following actuation of the piston 30 to the second position 33, in order for the piston 30 to be returned to the first position 31, the pressure of the first pressure chamber 36 is increased. The inlet valve 9 is moved to a closed position. The outlet valve 13 is briefly moved to a closed position, so that the pressure of the first pressure chamber 36 is increased above that of the third pressure chamber 40 and the piston 30 is moved to the first position 31. Due to the non-return valve 44, a vacuum remains in the third pressure chamber 40, such that the vacuum cup 20 remains secured to the surface 22.

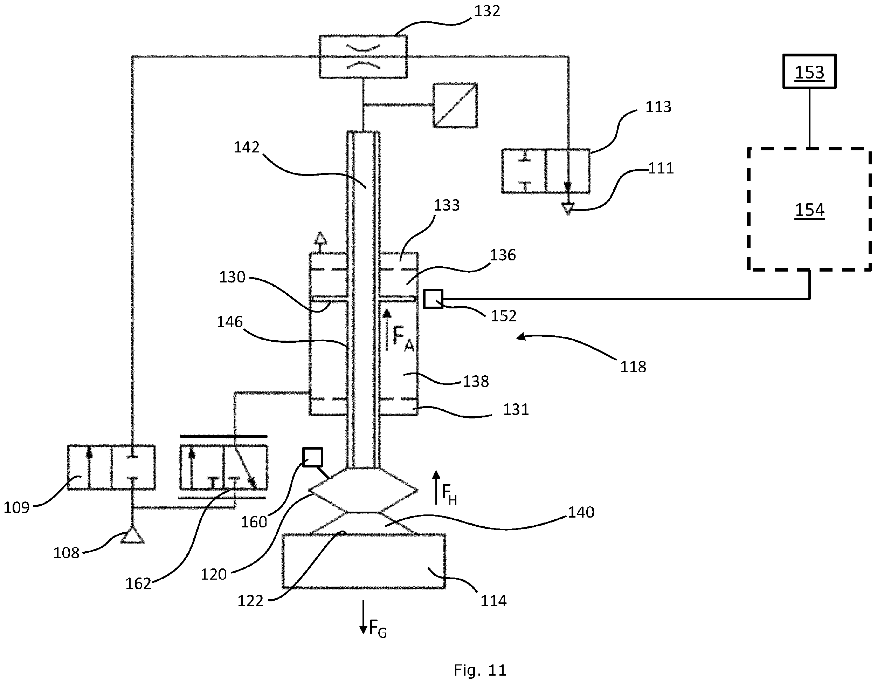

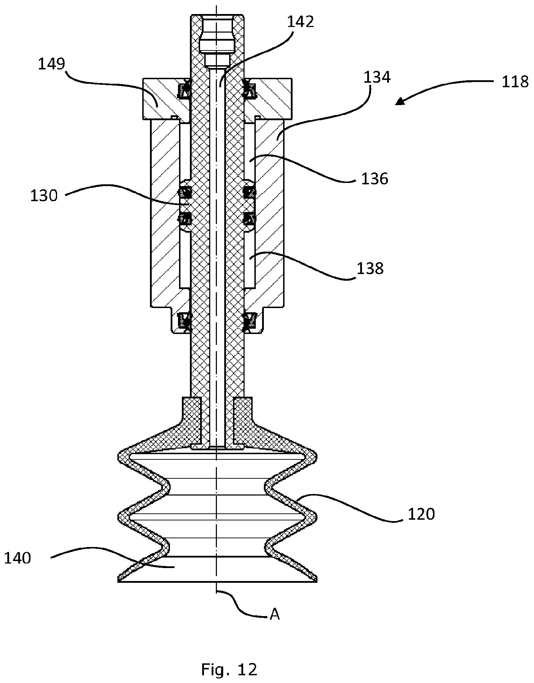

With reference to Figures 11 and 12, a further embodiment is shown. Like features are numbered as those of the previous embodiment, with an additional preceding "1". Only those features that differ from those of the previous embodiment are discussed in detail.

This embodiment differs from the previous embodiment in that the first and third pressure chambers 136, 140 are at different pressures. In this embodiment, in use, the first pressure chamber 136 is at substantially atmospheric pressure. The third chamber 140 is at a negative pressure such that a vacuum force is created to secure the vacuum cup 120 to the surface 122.

As in the previous embodiment, the piston 130 and the connecting portion 146 define a conduit 142 through the piston 130 to the vacuum cup 120. However, in this embodiment, the conduit 142 extends fully through the first pressure chamber 136, and does not connect the first pressure chamber 136 with the third chamber 140. The piston 130 extends through the first pressure chamber 136, and through a second end wall 149 of the body 134, proximal the arm 16, such that the conduit 142 extends through the second end wall 149. The conduit 142 is in fluid connection with the vacuum source 132, such that a vacuum can be created in the third chamber 140 to secure the vacuum cup 120 to the object 114.

In this embodiment, the second pressure chamber 138 is at a pressure that is adjusted depending on the negative pressure of the third chamber 140. The gripper assembly 118 of this embodiment includes a pressure sensor 160 for detecting pressure in the third pressure chamber 140. A proportional control valve 162 is used to control the second pressure chamber 138 pressure based on the pressure detected within the third pressure chamber 140 by the pressure sensor 160. The actuating force F_{A} can thus be varied and controlled depending on the negative pressure within the third chamber 140. When the piston 130 is to be actuated to move the vacuum cup 120 to the second, retracted, position, the second pressure chamber is raised above the pressure of the first pressure chamber 136, i.e. above atmospheric pressure in this embodiment, such that the piston 130 is moved along the axis A towards the mechanical arm 16. The difference in pressure between the first pressure chamber 136 and the second pressure chamber 138 provides the actuating force F_{A}. In this embodiment, the actuating force F_{A} is equal to or less than the holding force F_{H}. In an alternative embodiment, the actuating force F_{A} is greater than the holding force F_{H}, and some alternative suitable safety factor is provided to prevent damage to the vacuum cup.

In order to return the piston 130 to the first, extended position 131, the inlet valve 109 is closed. The second pressure chamber 138 is vented via the proportional control valve 162. The outlet valve 113 is moved to a closed position, such that the pressure of the first pressure chamber 136 is increased above the pressure of the second pressure chamber 138, and the piston 30 is returned to the first, extended, position.

The mechanical arm apparatus provides a simple and effective means of protecting the gripper assembly from damage. In particular, the vacuum cup is protected from damage resulting in the arm lifting overly heavy objects.

## Claims

1. A mechanical arm apparatus for transporting an object using a vacuum-operated end-of-arm tool, the mechanical arm apparatus comprising:
a mechanical arm; and
a vacuum-operated end-of-arm tool connected to the arm;
wherein the end-of-arm tool comprises at least one gripper assembly comprising a vacuum cup for attachment to a surface of an object to be transported;
wherein the gripper assembly further comprises an actuator configured to move the vacuum cup with respect to the arm between a first position where the vacuum cup is in a first, extended position with respect to the arm, and a second position where the vacuum cup is in a second, retracted position with respect to the arm.

2. The mechanical arm apparatus according to claim 1, wherein the actuator comprises a piston connected to the vacuum cup and configured to move the vacuum cup with respect to the arm upon actuation of the piston, wherein the piston is movable between a first position where the vacuum cup is in a first, extended position with respect to the arm, and a second position where the vacuum cup is in a second, retracted position with respect to the arm.

3. The mechanical arm apparatus according to claim 2, wherein the vacuum cup is configured for attachment to a surface of an object by a holding force, and wherein the piston is configured for actuation by an actuating force, and wherein the actuating force is substantially equal to the holding force, or wherein the actuating force is less than the holding force.

4. The mechanical arm apparatus according to claim 3, wherein the gripper assembly comprises a first pressure chamber at a first side of the piston, and a second pressure chamber at a second side of the piston, and wherein, for actuation of the piston to the second position, the first pressure chamber is configured to be at a first pressure, and the second pressure chamber is configured to be at a second pressure, higher than the first pressure, for generation of the actuating force.

5. The mechanical arm apparatus according to claim 4 wherein the first pressure is a negative pressure.

6. The mechanical arm apparatus according to claim 5, wherein the second pressure is substantially atmospheric pressure.

7. The mechanical arm apparatus according to any one of claims 4 to 6, wherein the gripper assembly comprises a third chamber defined by the vacuum cup, and wherein the third chamber is configured to be at a pressure substantially equal to or greater than that of the first pressure chamber, for generation of the holding force, optionally wherein the third chamber is connected to the first pressure chamber, optionally wherein the piston defines a conduit connecting the first pressure chamber and the third chamber.

8. The mechanical arm apparatus according to claim 4, wherein the first pressure is substantially atmospheric pressure.

9. The mechanical arm apparatus according to claim 4 or claim 8, wherein the gripper assembly comprises a third chamber defined by the vacuum cup, and wherein the third chamber is configured to be at a third, negative, pressure, for generation of the holding force, optionally wherein the gripper assembly further comprises a sensor for detecting the third pressure, and wherein the second pressure is adjusted depending on the third pressure, optionally wherein the gripper assembly further comprises a proportional valve between a pressure source and the second pressure chamber, for adjustment of the second pressure depending on the third pressure.

10. The mechanical arm apparatus according to any preceding claim, wherein the gripper assembly further comprises a sensor configured to detect movement of the piston to the second position.

11. The mechanical arm apparatus according to any preceding claim, further comprising a control system for controlling operation of the mechanical arm apparatus.

12. A method of lifting an object using a vacuum-operated end-of-arm tool, the method comprising the steps of:
a) providing a mechanical arm apparatus according to any one of claims 1 to 11;
b) positioning at least one of said vacuum cups on a surface of an object to be transported, the or each vacuum cup being arranged in a first configuration;
c) applying a holding force to secure the or each vacuum cup to the surface; and
d) applying an actuating force to move the vacuum cup to the second, retracted, position.

13. The method according to claim 12, wherein the actuating force is substantially equal to the holding force, or wherein the actuating force is less than the holding force.

14. The method according to claim 12 or claim 13, wherein the gripper assembly comprises a sensor configured to detect movement of the vacuum cup to the second position, further comprising the steps of:
e) detecting movement of the vacuum cup to the second position; and
f) upon movement of the vacuum cup to the second position, initiating movement of the arm to lift the object.

15. The method according to claim 14, wherein the gripper assembly comprises a sensor configured to detect movement of the vacuum cup to the second position, further comprising the steps of:
g) detecting the absence of movement of the vacuum cup to the second position;
h) re-positioning the at least one of said vacuum cups on a surface of an object to be transported in a second configuration, different to the first configuration; and
repeating steps c) and d).
